# EUROPEAN PATENT APPLICATION

(11) **EP 4 446 101 A1**
(43) Date of publication of application: **16.10.2024**
(21) Application number: 23167634.7
(22) Date of filing: 12.04.2023
(51) Int. Cl.: B29D 11/00

(54) **A METHOD SUITABLE FOR PRODUCING A PATTERN ON A SPECTACLE LENS**

(71) Applicant: Carl Zeiss Vision International GmbH, 73430 Aalen (DE)
(72) Inventor: Maffei, Mathias, 61048 Sant'Angelo in Vado (IT); Bertoncello, Sara, 21050 Bisuschio (IT); Giglioli, Giada, 21026 Gavirate (IT); Ferrari, Alberto, 20124 Milano (IT); Macchi, Marco, 21049 Tradate (IT); Krieger, Michael, 73434 Aalen (DE); Weis, Philipp, 73450 Neresheim (DE)
(74) Representative: Carl Zeiss AG - Patentabteilung

(57) **Abstract**

A method for applying a pattern (2) on a spectacle lens substrate (1). The method comprises producing a low contact angle surface on a preselected part of a surface of a spectacle lens (4) and providing a hard coating composition (70) and optionally a primer coating composition to the spectacle lens substrate (1).

## Description

### FIELD OF INVENTION

The present invention relates to a method suitable for producing a pattern, particularly, an invisible or semi-invisible pattern, on a spectacle lens.

Patterns on a surface of spectacle lenses are provided for various reasons. Pattern as a permanent marking on lens surfaces, for example, can contain information regarding the manufacturer, a batch number or characteristics of optical elements. Permanent markings can be also used for anticounterfeit purposes. Such permanent markings are usually invisible or semi-visible to the wearer of the marked lenses or during normal use of the lenses and visible under certain light conditions. Further, patterns on a surface of a spectacle lens can be configured to form optical elements such as lenslets on the spectacle lens for preventing or controlling progression of myopia or hyperopia.

### BACKGROUND OF INVENTION

EP 2 184 127 B1 discloses a method for producing a permanent marking in an optical element which consists of a material that is transparent in the visible spectral region. A marking region of the optical element is irradiated with laser radiation in order to generate local, near-surface material changes in such a way that a mark is generated. The laser radiation used has an operating wavelength in the region between 1.1 µm and 9.2 µm. The operating wavelength is chosen for which the material of the optical element exhibits a partial absorption with a transmittance between 60 % and 98 %. However, such a laser-based method removes a part of the substrate material that can result in drawbacks such as material weakening.

WO 2010/ 084 272 A1 discloses a method for printing on an ophthalmic glass that comprises forming a pattern by depositing a first photo-polymerizable ink on the surface of the ophthalmic glass, polymerizing the first ink using a UV-visible light source and making an over-print on at least a portion of the pattern. WO 2010/049887 A1 which is regarded as the closest prior art discloses a method providing a high surface energy marking on a surface of a spectacle lens already coated with anti-smudge top coating using a mask. Here, the marking is rendered visible to the wearer by fogging.

These prior art documents apply markings or patterns based on laser engraving or fogging marks, and thus are required to be applied on a finished spectacle lens with already coated surfaces. Hence anticounterfeiting patterns applied via these conventional methods can be easily circumvented as this pattern will be applied to a finished spectacle lens where no further steps to be done by the spectacle lens manufacturer are left. Spectacle manufacturer will not be able to prohibit copycats from putting the same anticounterfeit pattern onto the finished spectacle lens. With the conventional methods, spectacle lenses are still vulnerable to counterfeits. Further, obtaining a complex and sophisticated pattern as desired requires often complicated process. Therefore, there has been needs for a simple and easy method.

### SUMMARY OF INVENTION

In view of the prior art listed above, it is an object of the present invention to provide a method suitable for applying a pattern on a spectacle lens substrate with improved selectivity and refinedness which can be easily and simply done. It is another object of the present invention to provide an anticounterfeit pattern which cannot be easily reproduced.

According to a first aspect of the present invention, a method suitable for applying a pattern, particularly, an invisible or semi-invisible pattern, on a spectacle lens substrate is provided. The method comprises (i) producing a low contact angle surface on a preselected part of an uncoated surface of the spectacle lens substrate, and (ii) providing a hard coating composition to the spectacle lens substrate.

Contact angle, particularly contact angle for water, is an index evaluating whether the surface has a hydrophobic or hydrophilic characteristic based on the observation of the intermolecular interaction between the surface and a small drop of water when the drop meets the surface. It affects adhesive property of the surface of the spectacle lens substrate.

With a low contact angle, the surface of the spectacle lens provides a property close to hydrophilicity, while with a high contact angle, the surface of the spectacle lens provides a property close to hydrophobicity.

Based on the idea that different contact angles can convey different surface properties, the inventors have discovered that different contact angles of the surface of spectacle lens substrate can result in differences in terms of adhesion to the hard coating composition between the surface with a low contact angle and the surface with a higher contact angle. By conveying a low contact angle property on a preselected surface of a spectacle lens substrate and subsequently providing a hard coating composition to the spectacle lens substrate, a pattern is formed on the preselected surface of the spectacle lens substrate. This attributes to the difference in thickness of the hard coating composition which attributes to the different adhesion property of the surface. As such, by delicately adjusting the contact angle, the present method can provide a pattern on the surface of a spectacle lens substrate fulfilling the design needs. In a preferred embodiment, selectively producing a low contact angle surface is done by selective plasma treating. Plasma treatment has been used for various applications such as surface treatment, oxidation, polymer etching, etc. Plasma treatment may induce different effects depending on the type of the subject material, plasma condition, or the type of plasma used.

Selective plasma treating results in different contact angle of the surface of the spectacle lens substrate as well as other surface modifications including crosslinking to the surface of the spectacle lens substrate. Plasma treating enables more remarkable adhesion differences between the plasma treated surface and non-plasma treated surface of the spectacle lens substrate compared to other means for producing low contact angle surface. The plasma treating decreases the contact angle of the preselected part exposed to the plasma treatment. On the other hand, the part of the surface of the spectacle lens substrate which did not go through plasma treating will eventually have relatively higher contact angle compared to the preselected part exposed to the plasma.

It was surprisingly found that in the subsequent hard coating step, the preselected part of the surface which has a low contact angle or was exposed to the plasma treatment and the part of the surface which has a relatively higher contact angle or did not go through plasma treatment show significantly different adhesion to hard coating composition. The preselected part ends up in a higher height or greater thickness (protrusion) from the surface of the spectacle lens substrate due to higher adhesion to the hard coating composition, thereby forming a pattern on the surface. As the whole surface of the spectacle lens will be covered with the same hard coating composition, the height or thickness difference will be only visible under certain light conditions, generating an invisible or semi-invisible pattern. Said height or thickness difference is further applicable as anticounterfeit marks or can even be configured as optical elements such as lenslets on the surface of spectacle lenses for preventing or controlling a progression of myopia or hyperopia.

Said method is further advantageous in that an extremely thin region of the preselected surface of the spectacle lens is altered by plasma so that the surface properties necessary for a spectacle lens are not substantially changed or damaged.

A spectacle lens is an ophthalmic lens worn in front of, but not in contact with, the eyeball (DIN ISO 13666:2019, section 3.5.2), where an ophthalmic lens is a lens intended to be used for purposes of measurement, correction and/or protection of the eye, or for changing its appearance (DIN ISO 13666:2019, section 3.5.1). Non-limiting examples of a spectacle lens include corrective and non-corrective spectacle lenses, including single vision or multi-vision lenses, which may be either segmented or non-segmented, as well as other elements used to correct, protect, or enhance vision, magnifying lenses and protective lenses or visors such as found in spectacles, glasses, goggles and helmets. Especially, a spectacle lens is a lens which is designed to fit a spectacles frame so as to protect the eye and/or correct the sight and can be a non-corrective (also called plano or afocal lens, for example for sunglasses, sport-specific eyeglasses or for filtering particular wavelengths) or corrective ophthalmic lens. Corrective lens may be a unifocal, a bifocal, a trifocal or a progressive lens. Accordingly, in general, in the context of the invention, the term "lens" or "lenses" refers to any of the above spectacle lenses.

The spectacle lens of the present invention is a "spectacle lens substrate." The term "spectacle lens substrate" means in context of the present invention any uncoated or precoated spectacle lens blank, wherein the term "semi-finished lens blank" refers to a piece of optical material with one optically finished surface for the making of a spectacle lens (DIN ISO 13666:2019, section 3.8.1 to section 3.8.9). In any case, the spectacle lens substrate as used herein exhibits at least one surface without any coatings such as anti-reflective coatings or hard coatings. If one of the surfaces is precoated, the present method will be applied to the surface where no coating is applied.

A spectacle lens substrate comprising any conventional and known optical material can be used for the present method. The optical material is defined according to section 3.3.1 of DIN EN ISO 13666:2019-12 as transparent material capable of being manufactured into optical components. The spectacle lens substrate may be made of mineral glass according to section 3.3.1 of DIN EN ISO 13666:2019-12 and/or of an organic hard resin such as a thermosetting hard resin according to section 3.3.3 of DIN EN ISO 13666:2019-12; a thermoplastic hard resin according to section 3.3.4 of DIN EN ISO 13666:2019-12; or a photochromic material according to section 3.3.5 of DIN EN ISO 13666:2019-12. For example, the spectacle lens substrate can be made of at least one of the optical materials mentioned in the following table.

**Table: Examples of optical materials**

| Trade name | Optical material |
|---|---|
| CR-39, CR-330, CR-607, CR-630, RAV 700, RAV 7NG, RAV 7AT, RAV 710, RAV 713, RAV 720 | Polyallyldiglycol carbonate ((P)ADC) |
| RAVolution | Polyurea / Polyurethane |
| Trivex | Polyurea / Polyurethane |
| Panlite, Lexan, Makrolon | Polycarbonate (PC) |
| Grilamid, Trogamid, Rilsan | Polyamide (PA) |
| MR-6 | Polythiourethane |
| MR-8 | Polythiourethane |
| MR-7 | Polythiourethane |
| MR-10 | Polythiourethane |
| MR-174 | Polyepisulfide |
| MGC 1.76 | Polyepisulfide |
| Spectralite | Urethane /Methacrylate |
| | Mineral 1.5 |
| | Mineral 1.6 |
| | Mineral 1.7 |
| | Mineral 1.8 |
| | Mineral 1.9 |

The spectacle lens or spectacle lens substrate may comprise the optical material or consist of the optical material. The term "surface" or "spectacle lens (substrate) surface" refers to any layer of the three-dimensional spectacle lens (substrate) that is in direct contact with the environment. The surface can be regarded as its boundary. The surfaces of a spectacle lens (substrate) include its front surface, i.e., frontside; side surface, i.e., edge; and back surface, i.e., backside.

The inventors found that the spectacle lens substrate comprising polymeric material, preferably polycarbonate or polyamide, more preferably polyamide, as a lens material shows the most distinguishing adhesion property to the hard coating composition between the low contact angle surface and relatively higher contact angle surface; or between the plasma treated and untreated surfaces.

Meanwhile, the present method is advantageous as it may be also applicable to the organic hard resin spectacle lenses, which are, for example, made of polyallydiglycol carbonate. While the selective tinting method using the plasma treatment disclosed in EP 2215978.6 is only applicable to polymeric optical materials since the crosslinking which changes the adherence of the lens surface to the tinting solution does not take place in other optical materials, the present method based on the difference in surface contact angle may be also applied to the optical materials which are not polymeric. This might broaden the spectrum of the present method applying an invisible or semi-invisible pattern on the spectacle lens.

The term "preselected part" indicates at least one part of a surface of a spectacle lens determined to be the pattern or a part of the pattern. The selection is made prior to applying the present method. There can be at least one preselected part in the present method.

The term a "part (of a surface of a spectacle lens (substrate))" means a portion or division of a whole (surface of a spectacle lens (substrate)) that is separate or distinct. The term "at least (to) a part" may indicate a portion or division of a whole and/or the whole.

The phrase "producing a low contact angle surface" refers to providing an energy source to the surface of the spectacle lens substrate which can decrease the contact angle of the surface of the spectacle lens substrate. This can be done by any conventional methods known to decrease the contact angle of a surface such as plasma treating. In the present invention, the term "a low contact angle surface" refers to a spectacle lens substrate surface having lower contact angle than other parts of the surface. In other words, the preselected part will have a lower contact angle compared to the parts other than the preselected part. In a further embodiment, the term "low contact angle" may refer to a contact angle for water of 50° or smaller, preferably 40° or smaller, more preferably 30° or smaller, most preferably 20° or smaller.

The term "plasma" is a cluster of particles containing equal numbers of positive ions and electrons, free radicals, and natural species created by exciting a gas in an electromagnetic or electrical field. It is a state of matter in which an ionized substance becomes highly electrically conductive to the point that long-range electric and magnetic fields dominate its behavior. Plasma contains a significant portion of charged particles, i.e., ions and/or electrons. Plasma can be artificially generated by heating a neutral gas or subjecting it to a strong electromagnetic field. The term "plasma treatment" or "plasma treating" refers to treating a subject by a plasma condition using plasma generation methods. An artificial plasma can be generated by application of electric and/or magnetic fields through a gas. For example, the generation methods can be, but not limited thereto, low pressure discharges such as glow discharge plasmas, capacitively coupled plasma (CCP), cascaded arc plasma source, inductively coupled plasma (ICP), wave heated plasma; or atmospheric pressure such as arc discharge, corona discharge, dielectric barrier discharge (DBD), capacitive discharge, atmospheric pressure glow discharge (APGD), piezoelectric direct discharge plasma; or even an ion gun (oxygen, argon, etc.).

The phrase "selectively plasma treating" or "selective plasma treatment" means that plasma treatment is applied only to a certain desired (preselected) part of a surface of a spectacle lens substrate and the rest of the surfaces are not treated by plasma.

Producing a surface with a low contact angle or plasma treating is selectively done at the preselected part of an uncoated surface of a spectacle lens substrate to enhance adhesion of a hard coating composition and/or a primer coating composition, thereby forming a pattern thereon.

Producing a surface with a low contact angle or plasma treating is done on a surface of a spectacle lens substrate having a surface, specifically, front, side and/or, back surface, without any coatings such as anti-reflective coatings or hard coatings. Especially, producing a surface with a low contact angle or plasma treating is performed onto a spectacle lens substrate or a surface of a spectacle lens substrate, preferably on a surface of a spectacle lens surface, more preferably perpendicularly to the center of the surface of the spectacle lens substrate.

Here, the spectacle lens substrate is uncoated or precoated. That is, producing a surface with a low contact angle or plasma treating is performed on a surface of a spectacle lens substrate without any additional lens coatings or lens layers. In the prior art, additional coatings must have been applied before further application, which made the process of the prior art (for example, laser beam treatment or fogging marks) inefficient. Unlike the prior art, which still allows the copycats to apply the pattern after the manufacturing process is completed, applying the plasma treatment to uncoated surface of a spectacle lens substrate thereby directly applying a pattern on the spectacle lens substrate surface also prevents the pattern from being easily counterfeited by others.

To allow for differential adhesion to the hard coating composition with distinctive and high-quality pattern, the conditions for generating energy for producing a low contact angle surface or the plasma conditions should be selected properly. As different lens materials with different properties may be combined within the scope of the invention, it is not possible to indicate a certain condition that can be used for any possible lens materials and any possible apparatus for generating energy for producing a low contact angle surface or generating plasma. Still, the skilled person will be able to determine a set of suitable conditions considering the following restrictions. In one embodiment, differential adhesion to the hard coating composition in the preselected part and the parts other than the preselected part can be achieved by conveying hydrophilic characteristics to the preselected surface. In a preferred embodiment, the plasma treatment can be applied until the contact angle of the preselected part becomes lower than the contact angle of the parts other than the preselected part. In a more preferred embodiment, the plasma treatment can be applied until the contact angle for water of the preselected part becomes 50° or smaller, preferably 40° or smaller, more preferably 30° or smaller, most preferably 20° or smaller.

In this regard, in an embodiment where plasma treatment is used for producing a low contact angle surface, it is preferable when the direct current of plasma can be from 50 to 1,000 mA, more preferably from 50 to 500 mA, most preferably from 100 to 300 mA. Further, in a preferable embodiment, the direct current tension can be from 100 V to 10,000 V, more preferably from 100 V to 1,000 V. In another embodiment, the pressure during plasma treatment can be from 0.001 Pa to 100 Pa, preferably from 0.001 Pa to 50 Pa, more preferably from 0.001 Pa to 10 Pa. The pressure during plasma may differ depending on the type of plasma generation apparatus and/or the direct current or tension of the plasma. Plasma conditions weaker than these ranges would not be able to achieve a surface property change that allows either hard coating composition or primer coating composition to adhere onto the preselected part in an excessive amount, resulting in a selective and distinct surface height of the spectacle lens substrate. On the other hand, too strong plasma conditions may lead to damages or deterioration of properties of the preselected part required for a spectacle lens. Further, it has been also found that excessive exposure to plasma may cause deterioration of weather resistance performance of the hard coating.

It is preferable that the duration of plasma treatment is about 10 minutes or less, preferably from 10 seconds to 5 minutes, since a longer exposure to plasma may result in poorer properties of the spectacle lens. However, the duration of time may differ depending on the type and/or intensity of the applied plasma (e.g., plasma current and plasma tension). Plasma treatment can be performed by any conventionally used industrial means for generating plasma as long as the means can provide the conditions described above.

Particularly preferred plasma generation means are not limited thereto but can be those using a gas discharge. Preferably, the gas can be at least one selected from the group consisting of oxygen (O), nitrogen (N), argon (Ar), carbon dioxide (CO₂), helium (He), xenon (Xe) and air, preferably, oxygen (O), argon (Ar) and air. While not specifically limited thereto, in one embodiment, glow discharge plasma, which is plasma formed by the passage of electric current through a gas, can be used. In another embodiment, ion gun plasma, which is more compact, can be also used.

In the present invention, the step of plasma treating, which results in distinctive properties between the preselected part of the surface treated by plasma and the part of the surface not treated by plasma, is completed before providing a hard coating composition to the spectacle lens. This will make counterfeit of the spectacle lens manufactured by the present method even more difficult. Further, since the differential adhesion of hard coating composition which leads to a desired pattern is achieved by different properties of the respective parts of the surface of the spectacle lens, the quality of the pattern will be less affected by masking itself (but rather by the plasma treatment condition) compared to the prior art where the quality and refinedness of the pattern depend on the blocking performance of the masking means.

After producing the low contact angle surface or plasma treating, a hard coating composition is provided to the spectacle lens substrate. The hard coating composition can be provided to the surface of the spectacle lens substrate treated in the former steps. In one embodiment, the whole lens including front surface, side surface and back surface is treated by the hard coating composition. The term "hard coating composition" refers to a composition resulting in a hard coating as defined in ISO 13666:2019, section 3.18.2. A hard coating composition (typically a monomer) is coated onto outer surfaces of the spectacle lenses and the monomeric coating composition is then cured to form a coating that is more resistant to abrasion than the plastic material from which the optical element is formed. This process is commonly referred to as the hard coating of a lens and provides durability and increase longevity to the spectacle lens.

The present method does not depend on a specific type of hard coating process. Hard coating can be done by, for example, by dip coating or spin coating. For instance, a spectacle lens substrate is passed through a liquid bath based on hard coating composition where the coating composition adheres to both convex and concave sides of the lens. The hard coating is then allowed to cure in a high temperature. In one embodiment, the hard coating composition can be provided to the whole surface of the lens, e.g. by immersing the lens as a whole into the bath comprising a solution based on hard coating composition. This is possible as the surface properties of the preselected part of the surface of the spectacle lens substrate selectively treated to exhibit a low contact angle surface or treated by plasma in the previous step will be altered so that remarkably larger amount of hard coating composition is adhered to the preselected part compared to the parts of the surface other than the preselected part. In another embodiment, the hard coating composition can be provided by spin coating. A liquid hard coating solution comprising a hard coating composition is applied to a surface of a spectacle lens substrate using a spinning process and the lens is cured under UV light. Due to the surface property change in terms of contact angle, there is no need for a separate masking process or application of a mask in the hard coating step.

The hard coating composition refers to a composition comprising any hard coating material suitable for hard coating a spectacle lens.

For example, hard coating composition may comprise at least one of the hard coating materials disclosed in US 2005/0171231 A1, in US 2009/0189303 A1 or in US 2002/0111390 A1. Alternatively, the hard coating composition may be based on the abrasion resistant coating composition disclosed in WO 2007/070976 A1. These patent documents are incorporated herein by reference.

The hard coating composition preferably is based on the hard coating composition disclosed in EP 2 578 649 A1, particularly in claim 1 of EP 2 578 649 A1, which is incorporated herein by reference. The hard coating composition comprises
A)
   a) at least one silane derivative of the formula (I) Si(OR1)(OR2)(OR3)(OR4), wherein R1, R2, R3 and R4, which may be the same or different, are selected from an alkyl, an acyl, an alkyleneacyl, a cycloalkyl, an aryl or an alkylenearyl group, each of which may optionally be substituted, and/or
   b) at least one hydrolysis product of the at least one silane derivative of the formula (I), and/or
   c) at least one condensation product of the at least one silane derivative of the formula (I), and/or
   d) any mixture of the components a) to c) thereof;
B)
   a) at least one silane derivative of the formula (II) R6R7 3-nSi(OR5)n, in which R5 is selected from an alkyl, an acyl, an alkyleneacyl, a cycloalkyl, an aryl or an alkylenearyl group, each of which may optionally be substituted, R6 is an organic radical containing at least one epoxide group, R7 is selected from an alkyl, a cycloalkyl, an aryl or an alkylenearyl group, each of which may optionally be substituted, n is 2 or 3; and/or
   b) at least one hydrolysis product of the at least one silane derivative of the formula (II), and/or
   c) at least one condensation product of the at least one silane derivative of the formula (II), and/or
   d) any mixture of the components a) to c) thereof;
C) at least one colloidal inorganic oxide, hydroxide, oxide hydrate, fluoride and/or oxyfluoride;
D) at least one epoxide compound having at least two epoxide groups; and
E) at least one catalyst system comprising at least one Lewis acid and at least one thermos-latent Lewis acid-base adduct.

While a normal and conventional amount of hard coating composition suitable for hard coating will be adhered to the surface of the spectacle lens not treated by plasma (i.e., the part other than preselected part(s)) in the subsequent hard coating step, an excessive amount of the hard coating composition will adhere to the preselected part of the surface of the spectacle lens substrate treated by plasma. The excessive amount of the hard coating composition results in a height difference between the parts other than the preselected part and the preselected part, which forms a pattern. The excessive amount of the hard coating composition refers to an amount which can realize height or thickness difference between the preselected part and the parts that are not preselected. To be specific, the amount of the hard coating composition adhered to the preselected part can be 5% to 30% greater than the amount of hard coating composition adhered to the part that is not preselected. The preselected part will be determined depending on a desired pattern, keeping in mind that the preselected part will form the desired pattern.

In a preferred embodiment, the hard coating composition is a solvent-based hard coating composition. In such a case, the hard coating composition further comprises a solvent which is at least one selected from the group consisting of alcohol, ether, ester and water. The solvent-based hard coating composition was found to provide more distinctive pattern on the surface of the spectacle lens substrate, due to its relatively greater adherence to the preselected part of the surface of the spectacle lens substrate which has been treated to have a low contact angle or treated by the plasma as compared to the remaining part of the surface of the spectacle lens substrate which has a higher contact angle or which was not treated by the plasma. This is because the solvent-based hard coating composition has a higher affinity to the low contact angle surface having higher hydrophilicity compared to other types of hard coatings.

The hard coating composition resulting in hard coating is applied to uncoated surface of the spectacle lens substrate, by dip coating or spin-coating.

In another embodiment, the present method may further comprise a step of providing a primer coating composition before providing the hard coating composition. This means that if the spectacle lens substrate is coated with a hard coating composition and a primer coating composition, the primer coating layer will be closer to the surface of the spectacle lens than the hard coating layer. The term "primer coating" applies to any coating being applied to a spectacle lens substrate increasing the impact resistance as compared to a hard-coated spectacle lens substrate (i.e. a spectacle lens substrate comprising a hard coating as described above) by a factor >1 according to the repetitive ball drop test according to ISO 16936-1 :2020.

In addition to the hard coating composition, the primer coating composition also adheres to the preselected surface in an excessive amount compared to the amount of the primer coating composition adhered to the surface other than the preselected surface, thereby contributing to additional difference in the thickness between the preselected part of the surface and the part other than the preselected part. Hence even more distinct pattern can be obtained on the spectacle lens substrate surface. The excessive amount of the primer coating composition refers to an amount which can realize height or thickness difference between the preselected part and the parts that are not preselected. To be specific, the amount of the primer coating composition adhered to the preselected part can be 5% to 30% greater than the amount of primer coating composition adhered to the part that is not preselected.

The primer coating composition may preferably comprise i) at least one aqueous aliphatic, cycloaliphatic, aromatic or heteroaromatic polyurethane dispersion, at least one aqueous aliphatic, cycloaliphatic, aromatic or heteroaromatic polyurea dispersion, at least one aqueous aliphatic, cycloaliphatic, aromatic or heteroaromatic polyurethane-polyurea dispersion and/or at least one aqueous aliphatic, cycloaliphatic, aromatic or heteroaromatic polyester dispersion, preferably at least one aqueous aliphatic polyurethane dispersion or at least one aqueous aliphatic polyester dispersion and more preferably at least one aqueous aliphatic polyurethane dispersion, ii) at least one solvent, and iii) optionally at least one additive.

In a preferred embodiment, the primer coating composition is a solvent-based composition comprising a solvent. The solvent-based composition further comprises the component i) above. The solvent-based primer coating composition was found to provide more distinctive pattern on the surface of the spectacle lens, due to its excellent selective adherence to the preselected part of the surface of the spectacle lens substrate which is treated to have a low contact angle or treated by the plasma as compared to the remaining part of the surface of the spectacle lens substrate which has a higher contact angle or which was not treated by the plasma. This again attributes to the high affinity of the solvent-based primer coating to hydrophilic surface.

The primer coating composition resulting in primer coating is applied to uncoated surface of the spectacle lens substrate, by dip coating or spin-coating.

With the present method, the hard coating composition is directly applied to the surface of the spectacle lens substrate. As a result, the preselected part of the surface of the spectacle lens substrate forms the desired pattern consisting of the hard coating composition and the desired pattern itself can function as a hard coating layer of the preselected part at the same time. On the part other than the preselected part of the surface of the spectacle lens substrate, a normal hard coating layer is formed. Therefore, there is no need for an additional hard coating step.

Further, in the embodiment further applying a primer coating composition, the desired pattern consisting of the hard coating composition and the primer coating composition is formed with the hard coating layer on the top. In other words, on the preselected part, primer coating layer and hard coating layer are provided in an excessive amount thereby forming a desired pattern and simultaneously exhibit resistance to abrasion. On the part other than the preselected part of the surface of the spectacle lens substrate, a normal primer coating layer and a normal hard coating layer are formed.

As such, the present method has remarkable advantage in that it forms a desired pattern using the resources and methods which have been already used in the conventional lens manufacturing process. Further, the present method is not only easy to practice but also economical in that no new material is required other than the ones typically used for spectacle lens production. Furthermore, the primer coating and the hard coating layer and the desired pattern can be obtained by a single process, which streamlines and simplifies the whole spectacle lens manufacturing process.

The term "pattern" refers to any macroscopic element. For example, a selectively (locally) high portion of a surface of a spectacle lens, a mark, a gradient, a number, a letter of any type of graphic, a graphic representation such as a dot, symbol etc., on a spectacle lens can be deemed as a pattern. The pattern is produced by height differences within the surface of the spectacle lens substrate, and/or at least one lenslet, preferably a plurality of lenslet, on at least one surface of the spectacle lens substrate.

A selectively (locally) high portion of a surface of a spectacle lens may also refer to a specific arrangement of optical elements or lenslets embodied as small portions on the surface of the lens with protruded height. To be specific, spectacle lenses for myopia or hyperopia control have a special structure for controlling myopia or hyperopia on the surface of the spectacle lens. This structure is often realized by the structures providing a focus or a plurality of foci., in particular, a microlens, a lenslet, a bump, etc.

The term "lenslet" refers to an optical element in form of a microlens. Several lenslets can be arranged in the same plane forming a lenslet array. The lenslet may provide an additional focal power, i.e., a focal power that is added to the focal power (ISO 13666:2019(E), section 3.10.2) of a spectacle lens. The focal power of the spectacle lens may provide, assisted by accommodation, a focused image on the fovea and the additional focal power may, when added to the focal power of the spectacle lens, provide for a myopic defocus if the lenslet is used for at least retarding myopia.

Myopia is a vision condition in which people can see close objects clearly but objects farther away appear blurred. Hyperopia, or farsightedness, is a vision condition in which distant objects are usually seen more clearly than close ones. Hyperopia occurs due to the shape of the eye and its components. Spectacle lenses for myopia or hyperopia are of great importance. Such spectacle lenses may, for example, comprise lenslets as disclosed, for example, in WO 2019/ 206 569 A1, US 10 268 050 B2, and WO 2020/ 099 549 A1. However, the production of such lenslets is rather difficult employing molding or machining processes. The use of the method presented above for creating such lenslets may facilitate the production of such spectacle lenses as no specific molds or machining equipment is needed. Instead, it may be sufficient to apply hard coating composition as routinely performed on the surface of the spectacle lens substrate to obtain such lenslets, after selectively producing a low contact angle surface or selectively plasma treating. Moreover, lenslets can be individually configured and positioned in an easily applicable manner.

With the present method, the hard coating composition adhering to the preselected part of the surface of the spectacle lens in an excessive amount compared to the hard coating composition adhering to the parts other than the preselected part can form lenslets. Due to the wide freedom of designing a pattern given when producing a low contact angle surface or plasma treating, such complex design of focusing structures for myopia or hyperopia spectacle lens may be obtained.

The term "invisible" or "semi-invisible" means that the pattern is discernable with a human eye under the specific light condition such as white light from a point source, for example an ultra-white beam lamp such as Bulbtronics inspection lamp (Lens Inspection QC-X75-CE; https://www.bulbtronics.com/landing-pages/btg-bulbtronics-group/lens-inspection-qc-x75-ce/) or a point-source lighting such as LED from a camera flash of a smartphone) or a LED point-source lamp. Semi-invisible pattern refers to a pattern that is transparent and made see-through.

Neither the hard coating composition nor the primer coating composition adhered to the surface of the spectacle lens in an excessive amount causes significant optical transmittance differences compared to the part where normal amount of the hard coating composition or the primer coating composition is adhered thereto. It was found that the pattern of the present method meets the uniformity of luminous transmittance regulated by section 5.3.1. of ISO 12312-1: 2013(E). That is, the relative difference in the luminous transmittance value between any two points of the filter within a circle 40 mm in diameter around the reference point or to the edge of the filter less the marginal zone 5 mm wide, whichever is less, is not greater than 10%.

In a further detailed embodiment, the step of selectively producing a low contact angle surface on a preselected part of a surface of a spectacle lens substrate or selectively plasma treating a preselected part of a surface of a spectacle lens substrate comprises the steps of masking a part of the surface of the spectacle lens substrate other than the preselected part prior to producing the low contact angle surface or plasma treating, and de-masking the masked part of the surface of the spectacle lens substrate after producing the low contact angle surface or plasma treating and prior to providing a hard coating composition, and optionally a primer coating composition, to the spectacle lens substrate. In other words, selective production of the low contact angle surface or selective plasma treatment on the preselected part will be achieved by masking a part of the surface of the spectacle lens substrate except for the preselected part so that the masked part retains its original contact angle or is protected during plasma treating. The de-masking step will take place after producing the low contact angle surface or applying plasma treatment and before providing the hard coating composition, and optionally, the primer coating composition, to the spectacle lens substrate.

The term "masking" refers to covering a part of a surface of a spectacle lens substrate, and protecting, in turn, the masked part of the surface of the spectacle lens substrate from the contact with other substances or application of treatments.

The term "de-masking" means taking off or removing a cover or substance from a surface of a spectacle lens substrate, thereby enabling the previously masked part to regain exposure to other substances or treatments.

The term "masking means" is a construction which masks or covers at least a part of a lens surface. Masking means can be any construction suitable for covering and protecting a part of a surface of a spectacle lens during producing a low contact angle surface or applying plasma treatment. For example, masking means can be any type of tape (e.g., adhesive tape) which can be placed on and cover the lens surface, and any materials suitable for covering the lens surface (e.g., masking agent, die-cast cover or 3D printed cover, etc.). In one embodiment, masking means is placed on a part or parts of the surface of the spectacle lens other than the preselected part of the surface of the spectacle lens during the step of producing a low contact angle surface or conducting plasma treating. The masking means is removed at the de-masking step and a hard coating composition, and optionally a primer coating composition, is then provided to the spectacle lens.

In an exemplary embodiment, the masking means may be a lens holder as disclosed in EP 22159782.6. The lens holder disclosed in EP 2215978.6, in particular, the lens holder as claimed in EP 2215978.6 and PCT/EP2023/055050 incorporated herein to their entirety.

To be specific, the masking means can be a lens holder for a spectacle lens substrate having a surface comprising
- a reception unit configured to hold the spectacle lens substrate in a predefined position and
- a masking unit configured to mask a part of the surface of the spectacle lens substrate when held by the reception unit in the predefined position.

This lens holder is particularly suitable for selectively producing a low contact angle surface of a spectacle lens substrate or selectively plasma treating a surface of a spectacle lens substrate as it allows great freedom in providing selective application on a preselected part of an uncoated surface of the spectacle lens without affecting other parts of the surface.

The term "reception unit" defines a part of the lens holder being particularly configured to receive and hold one or more lenses. A reception unit is configured to hold a spectacle lens substrate in a predefined position to realize a desired pattern at a desired part of a surface of the spectacle lens substrate. The reception unit may comprise a subunit which is configured to be mounted on at least a part of a surface of a spectacle lens substrate. This, for example, can be an "annular mounting means", which is a subunit in an annular form configured to be mounted on the upper circumference, and optionally the outer (edge) circumference of the lens, adapted to the respective shape and surface profile (curvature) of the desired pattern. The annular mounting substantially matches with the circumference of the spectacle lens. The reception unit may comprise means for holding a lens, preferably at least two means for holding a lens in a predefined position. However, any other construction suitable for receiving and holding a lens may be defined as reception unit. The term "means for holding a lens" or "holding means" refers to any subunits which can hold the lens designed to be fitted to the side (edge shape, thickness) profile of the lens, for example, a snap-fit joint.

The term "masking unit" in the present invention is specifically used to indicate one of the components of the lens holder. The masking unit is a component of the lens holder and masks a surface of a spectacle lens substrate during producing a low contact angle surface or plasma treating.

The term "cover" means to put or lay something on, over or around a subject in order to protect the subject.

In one preferable embodiment, the lens holder may be manufactured by additive manufacturing (AM), also known as 3D printing.

In one exemplary embodiment, the reception unit and the masking unit of the lens holder are connected to each other. By being connected to each other, the reception unit and the masking unit form a lens holder as a single unit. As will be explained below, this may be embodied by a connection unit or a continuous surface between the masking unit and the reception unit.

In another exemplary embodiment, the reception unit may comprise a subunit which is configured to be mounted on at least a part of a surface of a spectacle lens substrate. In further embodiment, said subunit can be an annular mounting means surrounding at least the upper circumferential surface of the lens substrate. This annular mounting means can be designed to substantially match with the upper and/or outer (side) circumference of the spectacle lens substrate to be mounted upon. The annular mounting means may be configured to provide rigidity and mechanical strength to the reception unit for holding a spectacle lens substrate by holding the outer and/or upper circumference of the spectacle lens substrate. As the circumferential part of the spectacle lens substrate that is covered by the annular mounting means will not go through the plasma treatment, this part will not constitute a pattern in the subsequent step. Said part can be cut from the spectacle lens substrate at a proper finishing step, if necessary. In one embodiment, the width of the annular mounting means may be up to 15 mm, preferably between 1 mm and 10 mm. The width over 15 mm would be unpractical and the width below 1 mm would jeopardize the mechanical strength of the lens holder.

The reception unit may further comprise means for holding a spectacle lens substrate, preferably at least two means for holding the spectacle lens substrate, which are attachable and detachable from the lens or can be assembled with and disassembled from the spectacle lens substrate. The means for holding the spectacle lens substrate can be in any form which can be attached to/assembled with and then detached from/dissembled from the spectacle lens substrate so that the lens holder is not moved during the treatment. In one embodiment, the holding means is configured so that it fits the respective thickness and edge profiles of the spectacle lens substrate and fastens the spectacle lens substrate.

In an exemplary embodiment, the holding means can be a snap-fit. A snap-fit is an assembly used to attach two respective components so that they interlock with each other. In such a case, the lens may be designed to have a corresponding component to be interlocked with the holding means. For example, in a case where a spectacle lens substrate is manufactured by injection molding and has a unique edge shape due to the injection molding, the holding means may be configured to match the edge profiles of the lens so that it can hold the lens substrate. In this embodiment, the holding means may serve as a marking means for marking the alignment position of the lens holder as well. That is, by assembling the holding means to the corresponding positions of the lens substrate, the lens holder will be positioned according to the desired alignment with the lens substrate as well as be fixed with the lens substrate so that the part desired to be a part of the pattern is exposed and the part not desired to be the pattern is not exposed during the plasma treatment, which, in turn, leads to producing the pattern at a precise position.

The holding means can be positioned by a certain angle to one another which ensures fixing and fastening the lens substrate during the plasma treatment. For example, the two means may be displaced at the two symmetrical points of the annular mounting means, in other words, 180_{°} apart from each other, or, between 90_{°} to 180_{°} from each other.

The lens holder further comprises a masking unit configured to mask a part of a surface of a spectacle lens substrate and to protect the part of surface of the spectacle lens substrate during the plasma treatment. The masking unit is designed to be positioned at a part of a surface of a spectacle substrate lens where no desired pattern is located. The masking unit can be designed into any desired shape considering that only the unmasked part of the surface of the spectacle lens becomes a desired pattern after the step of providing a hard coating composition and/or a primer coating composition.

In one embodiment, the masking unit can be an independent unit which is separately and independently located from the reception unit. The masking unit will be connected to the reception unit through at least one connecting unit which is configured to connect the masking unit and the reception unit without having a contact with the lens substrate. For example, the connecting unit can be in a form of a bridge, which is configured to have no contact with the lens substrate, but only with the reception unit and the masking unit. With this configuration, high flexibility of pattern design can be offered. Even very small and/or complicated patterns can be easily obtained with high quality. This resolves the constraint of tape masking where a pattern which is not connected to the lens border can hardly be realized with precision due to difficulties in alignment. In one embodiment, the connecting unit can be on the holding means and/or the annular mounting means of the lens holder.

In a preferred embodiment, the thickness of the connecting unit is up to 10 mm, more preferably 0.1 mm to 5 mm, and most preferably 0.5 mm to 1.5 mm. If the bridging unit is too thick, unwanted shading on the corresponding surface of the spectacle lens substrate will be resulted. In another embodiment, the height of the connecting unit from the surface of the spectacle lens substrate can be up to 20 mm, more preferably 5 mm to 15 mm.

In another embodiment, the masking unit and the reception unit form a single unit having a continuous surface. The masking unit is configured to cover a part corresponding to a part of a surface of a spectacle lens substrate which does not constitute a desired pattern and to comprise at least one opening at a part corresponding to the preselected part of a surface of a spectacle lens substrate desired to and subject to selective plasma treating. The form of opening can be in any form and can be designed in consideration of the desired pattern.

The method of the present invention may further comprise a further coating step, for example, at least one of an antireflective coating, mirror coating, photochromic coating, polarizing coating, top coating, and additional hard coating.

According to a second aspect of the present invention, a spectacle lens having a pattern on a surface of the spectacle lens characterized in that the pattern consists of a hard coating composition, preferably a solvent-based hard coating composition, is provided. In a further embodiment, the pattern may consist of a hard coating composition and a primer coating composition, preferably, a solvent-based hard coating composition and a solvent-based primer coating composition. At the preselected part of the surface forming a pattern, the spectacle lens comprises the hard coating composition and/or the primer coating composition in an amount excessive to the amount of the hard coating composition and/or the primer coating composition at the part other than the preselected part. The amount of the hard coating composition and/or the primer coating composition at the preselected part can be 5% to 20% greater than the amount of the hard coating and/or the primer coating composition at the part other than the preselected part.

The pattern is realized by the thickness of the preselected part of the surface of the spectacle lens substrate where the pattern is located which is greater than the thickness of the part where no pattern is located. The thickness of the preselected part can be 5% to 20% greater than the thickness of the part other than the preselected part. Here, the pattern is invisible or semi-invisible. In a further embodiment where the pattern constitutes the optical elements, the optical elements are configured to prevent or control a progression of myopia or hyperopia. In this embodiment, the optical elements consist of a hard coating composition and/or a primer coating composition.

In one embodiment of the second aspect, the spectacle lens substrate comprises a polymeric lens material, preferably polycarbonate or polyamide, more preferably polyamide. In a further embodiment, the spectacle lens substrate comprises a polymeric lens material such as polycarbonate or polyamide, preferably polyamide, the hard coating composition is a solvent-based composition, and the primer coating composition is a solvent-based composition.

According to a third aspect of the present invention, a data set stored on a computer-readable medium or carried by a data signal, the data set comprising at least one of the following data: (i) a virtual representation (i.e. analytical or numerical representation) of the spectacle lens according to the second aspect of the present invention where the representation of the spectacle lens is configured to be used for a manufacture of the spectacle lens and (ii) data containing computer-readable instructions which, when executed by a computer, causes an apparatus suitable for producing a low contact angle surface or plasma treating on a preselected part of an uncoated surface of the spectacle lens and an apparatus suitable for providing a hard coating composition and/or a primer coating composition to produce the spectacle lens according to the second aspect or to execute the method according to the first aspect is also provided.

In addition, a computer program comprising instructions which, when the program is executed by a computer, causes an apparatus suitable for producing a low contact angle surface or plasma treating on a preselected part of an uncoated surface of a spectacle lens and an apparatus suitable for providing a hard coating material and/or a primer coating composition to the spectacle lens to execute the method according the first aspect of the present invention is provided. Further, a computer-readable storage medium stored on the computer program and a data carrier signal carrying the computer program are provided.

Furthermore, a system suitable for applying a pattern on a spectacle substrate is provided, which comprises
- an apparatus suitable for hard coating and/or primer coating the spectacle lens substrate,
- an apparatus suitable for selectively producing a low contact angle surface or selectively plasma treating, i.e., on a preselected part of an uncoated surface of the spectacle lens substrate, and
- masking means, preferably the lens holder for a spectacle lens substrate as described with respect to the first aspect of the present invention.

Lastly, a kit comprising the masking means, preferably the lens holder for a spectacle lens substrate having a surface which comprises a reception unit configured to hold the spectacle lens substrate and a masking unit to cover the part other than the preselected part of the surface of the spectacle lens during producing a low contact angle surface or during plasma treating, as described in detail with respect to the first aspect of the present invention, and instructions for use according to the method of the first aspect of the present invention is provided.

### BRIEF DESCRIPTION OF THE DRAWINGS

Further features, properties and advantages of the present invention will become clear from the following description of embodiments in conjunction with the accompanying drawings.
- Figure 1: illustrates a flowchart of the present method according to an embodiment.
- Figure 2: shows a pattern produced according to the method of the present invention.
- Figures 3A and 3B: illustrate the lens holder comprising a reception unit and a masking unit according to an embodiment.
- Figures 4A and 4B: illustrate the lens holder comprising a reception unit and a masking unit according to another embodiment.

### DETAILED DESCRIPTION OF THE DRAWINGS

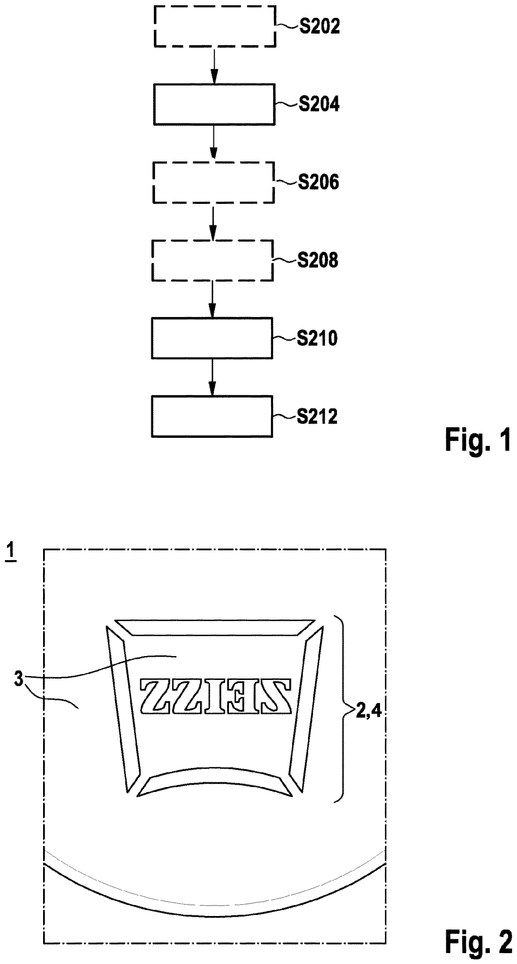

Figure 1 shows a flowchart of the method for applying a pattern according to an embodiment of the first aspect of the present invention. In an optional step S202, a masking means or a lens holder is produced using 3D printing. The lens holder is configured to cover the surface of the spectacle lens substrate except for the preselected part of the surface where the pattern will be formed. In a preferred embodiment, the lens holder can be the lens holder as disclosed in EP 22159782.6, which comprises a reception unit suitable for holding the spectacle lens in a predefined position and a masking unit suitable for covering the part other than the preselected part of the surface of the spectacle lens substrate during the plasma treating. The reception unit and the masking unit are connected to each other in a preferred embodiment.

In a first step S204, the preselected part of the surface of the spectacle lens substrate is treated to produce a low contact angle surface thereon, preferably is subjected to plasma treating. In an embodiment using masking means, the spectacle lens substrate assembled with/attached to the masking means or the lens holder is subjected to producing a low contact angle surface or goes through plasma treatment, thereby only the preselected part has a low contact angle or is treated by plasma.

In another optional step S206, the masking means or the lens holder is removed.

In a further optional step S208, a primer coating composition is provided by dip-coating or spin-coating.

In a second step S210, a hard coating composition is provided. The spectacle lens can be immersed (partly or as a whole) into the bath containing the hard coating composition to obtain a desired pattern.

In a third step S212, a spectacle lens with a desired pattern is obtained.

An optional coating step, for example, anti-reflective coating or mirror coating, may take place after the third step S212.

Figure 2 shows one example of the pattern obtainable by the present method. The obtained surface pattern is see-through and semi-visible by the human eye. Figure 2 shows the pattern being projected on a white background by a UV lamp. As can be seen here, an anti-counterfeit pattern which is invisible or semi-invisible to the wearer of the marked lenses or during normal use of the spectacle lens without deteriorating the uniformity of luminous transmittance is obtained. A spectacle lens substrate 1 with a pattern 2 formed on a preselected part 4 of the surface of the spectacle lens substrate and is configured to form an anticounterfeit mark. The pattern 2 is generated due to an excessive amount of the hard coating composition adhered to the preselected part 4, and optionally also due to an excessive amount of the primer coating composition adhered thereto. The part of the surface other than the preselected part 3 is coated with a normal amount of a hard coating composition and/or a primer coating composition, thereby does not constitute the pattern 2.

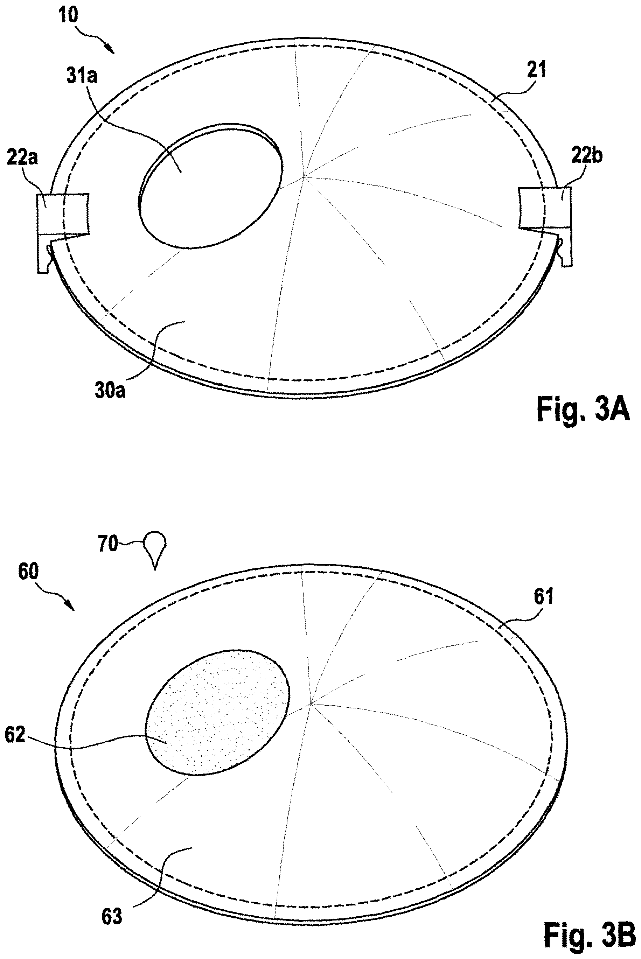

Figure 3A provides the first exemplary embodiment of the present method using the lens holder 10 wherein a lens holder 10 comprises (i) a reception unit configured to hold the spectacle lens substrate 60 in a predefined position comprising an annular mounting means 21 and at least two holding means 22a, 22b, and (ii) a masking unit 30a. Here, the masking unit 30a and the reception unit are configured as a single unit with a continuous surface. The masking unit 30a comprises an opening 31a where the corresponding surface of the spectacle lens substrate will be exposed to the plasma treatment. Here, the opening 31a is depicted as a circular shape for simplicity, but it can be easily understood from the already provided details that the opening 31a can be designed in a flexible fashion. With this, a desired pattern identical to the shape of the opening 31a will be obtained. By applying a hard coating composition, and optionally a primer coating composition, a pattern at the preselected part of the surface of the spectacle lens substrate 62 will be obtained. The part 61, 63 covered with the annular mounting means 21 and the masking unit 30a will not constitute the pattern and will be simply hard coated, and optionally additionally be coated with the primer. Here, the reception unit 10 comprises two holding means 22a, 22b which provide a fixed holding of a spectacle lens substrate to protect the covered part during plasma treating for an exemplary purpose. The holding means 22a, 22b are designed to fit with the edge profile of the lens substrate.

Using 3D printing, a more flexible design of the lens holder 10, even with very small openings or openings with a complicated shape can be obtained. The number and/or shape of openings may vary depending on the desired patterns. The surface of the spectacle lens substrate 60 corresponding to opening 31a will be exposed during the plasma treatment and will, in turn, have higher affinity to the hard coating composition and optionally additionally to the primer coating composition at the later step. After the plasma treatment, the lens holder 10 will be removed from the lens 60 and the hard coating composition 70 and optionally the primer coating composition 70 will be provided to the spectacle lens 60. As a result, the lens 60 wherein the surface of the preselected part has a pattern 62 (which consists of an excessive amount of the hard coating composition and/or the primer coating composition) which has been hard coated and the part of the surface with no pattern 61, 63 but with hard coating and/or primer coating are obtained as shown in Figure 3B.

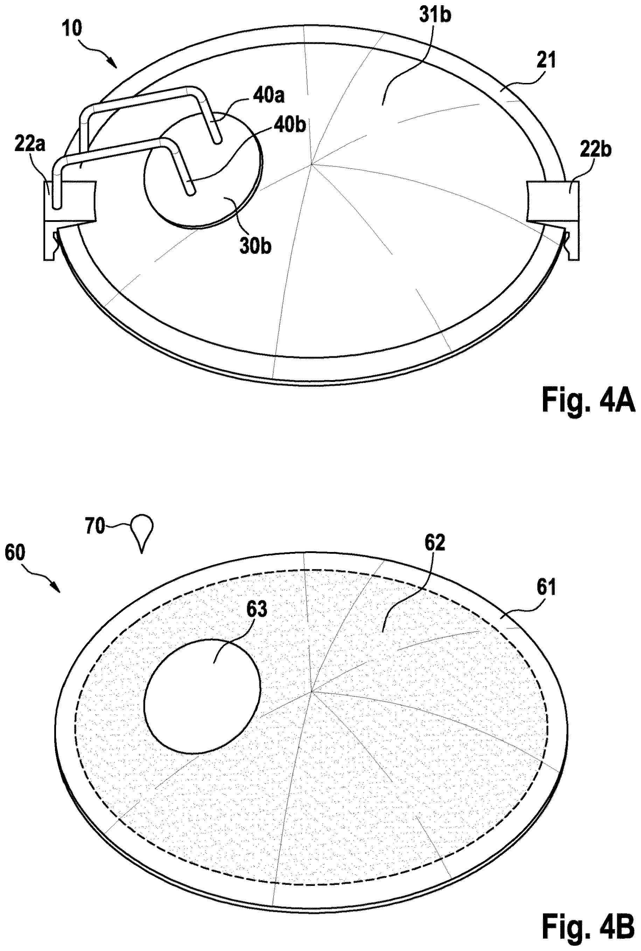

Figure 4A provides the second exemplary embodiment of the present method using the lens holder 10 wherein the lens holder 10 comprises (i) a reception unit comprising an annular mounting means 21 and at least two holding means 22a, 22b, and (ii) a masking unit 30b, which is a unit independently and separately positioned from the reception unit. The masking unit 30b is connected to the reception unit with at least one connecting unit 40a, 40b. The masking unit 30b can be connected to the annular mounting means 21 and/or the holding means 22a, 22b. The connecting units 40a, 40b are configured not to have a contact with or not to cover the lens surface such that the lens surface underneath the connecting units 40a, 40b is subject to the plasma treating and therefore also constitutes the pattern. For this, the thickness and height of the connecting units 40a, 40b may be adjusted as described in the relevant part above. The number and/or shape of the connecting units 40a, 40b may vary and can be selected to enable a firm connection between the reception unit and the masking unit 30b, thereby the masking unit 30b is not moved during the plasma treatment to secure a high-quality pattern. Although in Figure 4A only one masking unit 30b having a circular shape is provided, it should be understood that this is for an explanatory purpose. It can be easily understood that the number and/or shape of the masking unit 30b (accordingly, those of the connecting units as well) can be freely adjusted depending on the desired pattern. The remaining parts will be the opening 31b of the lens holder 10. The preselected part of the surface of the spectacle lens substrate 62 corresponding to the opening 31b of the lens holder 10 will be subjected to the plasma treatment, and thus have a surface pattern 62 (which consists of an excessive amount of the hard coating composition and/or the primer coating composition) which has been hard coated. On the other hand, the masked part of the surface 61, 63 will not be subjected to plasma treatment and therefore will not have any pattern but still with hard coating and/or primer coating. The upper circumferential part of the lens 61 can be cut at the finishing step if necessary.

## Claims

1. A method suitable for applying a pattern (2) on a spectacle lens substrate (1) having a surface, **characterized by** the steps of
(i) producing a low contact angle surface on a preselected part of an uncoated surface of the spectacle lens substrate (4), and
(ii) providing a hard coating composition (70) to the spectacle lens substrate (1).

2. The method according to Claim 1,
**characterized in that** producing a low contact angle surface on the preselected part of the uncoated surface of the spectacle lens substrate (4) is selectively plasma treating the preselected part of the uncoated surface of the spectacle lens substate (4).

3. The method according to Claim 1 or 2,
**characterized by** comprising the steps of
- masking a part of the surface of the spectacle lens substrate (3) other than the preselected part of the surface of the spectacle lens substrate (4) prior to producing the low contact angle surface on the preselected part of the uncoated surface of the spectacle lens substrate (4),
- de-masking the masked part of the surface of the spectacle lens substrate (3) after producing the low contact angle surface and prior to providing the hard coating composition (70) to the spectacle lens substrate (1).

4. The method according to any one of Claims 1 to 3,
**characterized by** further comprising the step of (iii) providing a primer coating composition (70) to the spectacle lens substrate (1) after step (i) and before step (ii).

5. The method according to any one of Claims 1 to 4,
**characterized in that** the pattern (2) is invisible or semi-invisible.

6. The method according to any one of Claims 1 to 5,
**characterized in that** the pattern (2) is configured to form optical elements for preventing or controlling a progression of myopia or hyperopia.

7. The method according to any one of Claims 1 to 6,
**characterized in that** the low contact angle is the low contact angle for water within at least one of the following ranges:
(i) 50° or smaller,
(ii) 40° or smaller,
(iii) 30° or smaller, and
(iv) 20° or smaller.

8. The method according to any one of Claims 1 to 7,
**characterized in that** the hard coating composition and/or the primer coating composition (70) is a solvent-based composition.

9. A spectacle lens (1) having a pattern (2) on a surface of the spectacle lens (1),
**characterized in that** the pattern (2) consists of (i) a hard coating composition or (ii) a hard coating composition and a primer coating composition (70).

10. The spectacle lens (1) according to Claim 9,
**characterized in that** the pattern (2) is invisible or semi-invisible.

11. The spectacle lens (1) according to Claim 9 or 10,
**characterized in that** the spectacle lens (1) comprises at least one of the following:
(a) polymeric material,
(b) polycarbonate, and
(c) polyamide.

12. The spectacle lens (1) according to any one of Claims 9 to 11, **characterized in that** the hard coating composition and/or the primer coating composition (70) is a solvent-based composition.

13. A data set stored on a computer-readable medium or carried by a data signal, the data set comprising at least one of the following data:
(i) a virtual representation of the spectacle lens according to any one of Claims 9 to 12 where the representation of the spectacle lens is configured to be used for a manufacture of the spectacle lens, and
(ii) data containing computer-readable instructions which, when executed by a computer, causes an apparatus suitable for selectively producing a low contact angle surface or selectively plasma treating an uncoated surface of the spectacle lens substrate, and an apparatus suitable for providing a hard coating composition and/or a primer coating composition to produce the spectacle lens according to any one of Claims 9 to 12.

14. A computer program comprising instructions which, when the program is executed by a computer, causes an apparatus suitable for selectively producing a low contact angle surface or selectively plasma treating an uncoated surface of a spectacle lens substrate and an apparatus suitable for providing a hard coating material and/or a primer coating composition to execute the method according to any one of Claims 1 to 8.

15. A computer-readable storage medium having stored thereon the computer program of Claim 14.
